(19) **Europäisches Patentamt / European Patent Office / Office européen des brevets**

(11) **EP 4 691 735 A1**

(12) # EUROPEAN PATENT APPLICATION
published in accordance with Art. 153(4) EPC

(43) Date of publication:
**11.02.2026 Bulletin 2026/07**

(21) Application number: **24780802.5**

(22) Date of filing: **29.03.2024**

(51) International Patent Classification (IPC):
**B29C 55/02** *(2006.01)*      **B29C 55/06** *(2006.01)*
**B32B 27/32** *(2006.01)*      **B65D 65/40** *(2006.01)*
**C08J 5/18** *(2006.01)*      **C08L 23/04** *(2006.01)*
**B29K 23/00** *(2006.01)*      **B29L 7/00** *(2006.01)*

(52) Cooperative Patent Classification (CPC):
**B29C 55/02; B29C 55/06; B32B 27/32;
B65D 65/40; C08J 5/18; C08L 23/04;**
B29K 2023/00; B29L 2007/00

(86) International application number:
**PCT/JP2024/013033**

(87) International publication number:
**WO 2024/204707 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023057857**

(71) Applicant: **Prime Polymer Co., Ltd.
Tokyo 104-0028 (JP)**

(72) Inventors:
• **SEKIYA Keiko
  Ichihara-shi, Chiba 299-0108 (JP)**
• **YOSHIDOME Ken
  Ichihara-shi, Chiba 299-0108 (JP)**

(74) Representative: **J A Kemp LLP
80 Turnmill Street
London EC1M 5QU (GB)**

(54) **STRETCHED FILM, MULTILAYER BODY, PACKAGING MATERIAL AND METHOD FOR PRODUCING STRETCHED FILM**

(57)      An object is to provide a film that has an excellent balance among stiffness, low shrinkage, and machine direction tear strength and can be used as a base material for packaging materials having excellent luster. A stretched film containing an ethylene-based polymer, in which (a1) the melt flow rate (MFR) measured at 190°C and at a load of 2.16 kg is 0.2 to 10 g/10 min and (a2) the density is 940 to 970 kg/m$^3$, and 100 to 2500 ppm of a nucleating agent relative to 100 parts by mass of the ethylene-based polymer, a packaging material composed of the same, and a method for producing a stretched film.

EP 4 691 735 A1

**Description**

Technical Field

The present invention relates to a stretched film, a laminate, a package, and a method for producing a stretched film.

Background Art

In recent years, laws have been enacted concerning the disposal of a variety of plastics against the backdrop of environmental issues, there has been an increasing need for the recycling of package materials, and a variety of studies have been underway regarding recyclable packaging materials. Among them, for example, mono-materials each composed of a single type of material (for example, ALL-PE) are attracting attention as recyclable packaging materials.
Films composed of a variety of resins are used as base materials in ordinary packaging materials, and examples of characteristics necessary for ALL-PE base materials include stiffness. High-density polyethylene (HDPE) is suitable as a resin from the viewpoint of stiffness, but HDPE has a problem of low luster. In addition, stretch forming is often performed for stiffness improvement, but there is another problem in that neck-in (width drop) during stretching narrows the width of a film that can be collected and decreases productivity.

Summary of Invention

Technical Problem

In view of the above-described conventional techniques, an object of the present invention is to provide a film that has excellent stiffness and can be used as a base material for packaging materials having excellent luster and to mitigate neck-in.

Solution to Problem

As a result of intensive studies in view of the above-described problems, the present inventors found that a stretched film composed of a polyethylene-based resin composition having specific physical properties is capable of solving the above-described problems and completed the present invention.
A stretched film of the present invention is as follows.

[1] A stretched film comprising: an ethylene-based polymer satisfying the following requirement (a1) and requirement (a2); and 100 to 2500 ppm of a nucleating agent relative to 100 parts by mass of the ethylene-based polymer: requirement (a1): a melt flow rate (MFR) measured at 190°C and at a load of 2.16 kg is 0.2 to 10 g/10 min, and requirement (a2): a density is 940 to 970 kg/m$^3$.
[2] The stretched film according to [1], wherein a stretch ratio is twice or more and less than six times.
[3] The stretched film according to [1] or [2], wherein the ethylene-based polymer has a Mw/Mn of 2 to 15.
[4] The stretched film according to any one of [1] to [3], wherein the stretched film has gloss of 30% or more, an elastic modulus (MD direction) of 3000 MPa or more, and a tear strength (MD direction) of 8 N/cm or more.
[5] A laminate comprising: the stretched film according to any one of [1] to [4].
[6] The laminate according to [5], wherein the stretched film according to any one of [1] to [4] is positioned in at least one outermost layer in the laminate.
[7] The laminate according to [6], wherein the stretched film according to any one of [1] to [4] is positioned in both outermost layers of the laminate.
[8] A packaging material comprising: the stretched film according to any one of [1] to [4] or the laminate according to any one of [5] to [7].
[9] A package being packaged with a packaging material including the stretched film according to any one of [1] to [4] or the laminate according to any one of [5] to [7].
[10] A method for producing the stretched film according to any one of [1] to [4], the method comprising: a step of producing a film containing an ethylene-based polymer satisfying the following requirement (a1) and requirement (a2) and 100 to 2500 ppm of a nucleating agent relative to 100 parts by mass of the ethylene-based polymer by melt extrusion forming; and a step of stretching the film:

(a1) a melt flow rate (MFR) measured at 190°C and at a load of 2.16 kg is 0.2 to 10 g/10 min, and
(a2) a density is 940 to 970 kg/m$^3$.

Advantageous Effects of Invention

The stretched film of the present invention has an excellent balance among stiffness, low shrinkage, and machine direction tear strength, has excellent luster, can be suitably used as a recyclable packaging material, and is capable of mitigating neck-in.

Description of Embodiments

Hereafter, the present invention will be described in detail.

A stretched film of the present invention contains an ethylene-based homopolymer or a copolymer of ethylene and an $\alpha$-olefin having 3 to 20 carbon atoms (hereinafter abbreviated as an ethylene-based polymer in some cases).

Regarding requirement (a1)

The lower limit of the MFR (190°C, 2.16 kg load) of the ethylene-based polymer is 0.2 g/10 min or more, preferably 0.4 g/10 min or more, and more preferably 0.8 g/10 min or more, and the upper limit is 10 g/10 min or less, preferably 5 g/10 min or less, and more preferably 3 g/10 min or less. When the MFR (190°C, 2.16 kg load) is within this range, stretching stability and luster can be obtained.

Regarding requirement (a2)

The lower limit of the density of the ethylene-based polymer is 940 kg/m$^3$ or higher, preferably 942 kg/m$^3$ or higher, and more preferably 943 kg/m$^3$ or higher, and among them, 946 kg/m$^3$ or higher is particularly preferable. In addition, the upper limit is 970 kg/m$^3$ or lower, preferably 965 kg/m$^3$ or lower, and more preferably 962 kg/m$^3$ or lower. When the density is within this range, stiffness and stretching stability can be obtained. The density is a value measured in accordance with JIS K7112 (density gradient tube method).

Regarding molecular weight distribution (Mw/Mn)

In addition, the molecular weight distribution (Mw/Mn) of the ethylene-based polymer is not particularly limited, but the upper limit value is preferably 15 or less and more preferably 13 or less, and among them, 7 or less is particularly preferable. In addition, the lower limit value is preferably 2 or more and more preferably 2.1 or more. When the molecular weight distribution of the ethylene-based polymer is within this range, the stretched film has an excellent balance between extrudability and luster. The molecular weight distribution can be obtained by measurement by gel permeation chromatography.

The distribution of the molecular weight of the ethylene-based polymer is preferably a distribution in which the proportion of molecular weights of 10000 or less exceeds 8.5 mass% of all. This proportion is more preferably set to 8.7 mass% or more, particularly, 8.9 mass% or more and is more preferably set to 25 mass% or less, particularly, 20 mass% or less. During the production of an original film, the pressure of a molten resin becomes low, and efficient forming becomes possible, which is preferable.

The weight-average molecular weight and molecular weight distribution of the ethylene-based polymer can be measured by gel permeation chromatography (GPC) in which molecular weights have been calibrated using a standard substance having a known molecular weight (monodisperse polystyrene).

The ethylene-based polymer in the stretched film is not particularly limited as long as the ethylene-based polymer satisfies the requirement (a1) and requirement (a2), but an ethylene homopolymer and a copolymer of ethylene and an $\alpha$-olefin having 3 or more carbon atoms (ethylene-$\alpha$-olefin copolymer) are preferable.

The $\alpha$-olefin in the ethylene-$\alpha$-olefin copolymer is preferably at least one selected from $\alpha$-olefins having 3 to 20 carbon atoms, and specific examples thereof include propylene, 1-butene, 1-pentene, 4-methyl-1-pentene, 1-hexene, and 1-octene.

The ethylene-based polymer includes an ethylene-derived constitutional unit, and the content thereof is 50 mol% or more and 100 mol% or less, preferably more than 50 mol% and 100 mol% or less, more preferably 55 to 100 mol%, and still more preferably 60 to 100 mol%.

The ethylene-based polymer can be produced using a known catalyst such as a Ziegler-Natta catalyst and a metallocene catalyst. In addition, as a resin component, other low-density polyethylene may be used in addition to the copolymer of ethylene and an $\alpha$-olefin. In the present invention, one or a combination of two or more polyethylenes satisfying each of the above-mentioned characteristics can be selected from commercially available polyethylene-based resins and used as the resin component. An example of the polyethylene-based resin containing the ethylene-$\alpha$-olefin copolymer can be a linear low-density polyethylene.

The ethylene-based polymer may contain one or more constitutional units derived from a biomass-derived monomer (ethylene). Monomers of the same kind that constitute the polymer may be only biomass-derived monomers or may be both a biomass-derived monomer and a fossil fuel-derived monomer. The biomass-derived monomer refers to monomers produced using, for example, all reproducible natural raw materials derived from plant or animal, including fungi, yeast, algae, and bacteria, and residues thereof as a raw material, contains a $^{14}$C isotope as carbon in a proportion of about $1 \times 10^{-14}$, and has a biomass carbon concentration (pMC) measured in accordance with ASTM D6866 of about 100 (pMC). The biomass-derived monomer (ethylene) can be obtained by, for example, a conventionally known method.

The ethylene-based polymer preferably includes the constitutional unit derived from the biomass-derived monomer from the viewpoint of reducing an environmental impact. Even when the raw material olefin contains a biomass-derived olefin, the molecular structure thereof is the same as that of a polyethylene-based polymer composed of a fossil fuel-derived monomer except that a $^{14}$C isotope is contained in a proportion of about $1 \times 10^{-12}$ as long as the polymer production conditions such as a catalyst for polymerization and the polymerization temperature are the same. Therefore, these performances are also considered to remain unchanged.

Furthermore, the unit that constitutes the ethylene-based polymer may contain a chemical recycling-derived monomer (ethylene or $\alpha$-olefin). The monomer that constitutes the polymer may be only a chemical recycling-derived monomer or may contain a chemical recycling-derived monomer and a fossil fuel-derived monomer and/or biomass-derived monomer. The chemical recycling-derived monomer can be obtained by a conventionally known method. The ethylene-based polymer preferably contains the chemical recycling-derived monomer from the viewpoint of reducing an environmental impact (mainly waste reduction). Even when the raw material monomer contains the chemical recycling-derived monomer, since the chemical recycling-derived monomer is a monomer obtained by restoring a polymer such as waste plastic up to a monomer unit such as ethylene by, for example, depolymerization or thermal decomposition or a monomer produced using the above-described monomer as a raw material, the molecular structure is thus the same as that of the ethylene-$\alpha$-olefin copolymer composed of a fossil fuel-derived monomer as long as the polymer production conditions such as a catalyst for polymerization, the polymerization process, and the polymerization temperature are the same.

Therefore, the performances are also considered to remain unchanged.

Regarding nucleating agent

The stretched film of the present invention contains a nucleating agent in a proportion of 100 to 2500 ppm relative to 100 parts by mass of the ethylene-based polymer.

Examples of a nucleating agent (B) include sorbitol-based nucleating agents, phosphorus-based nucleating agents, cyclic dicarboxylate-based nucleating agents, metal carboxylate-based nucleating agents, polymer-based nucleating agents, inorganic compound-based nucleating agents, and rosin-based nucleating agents.

Specific examples of the sorbitol-based nucleating agents include 1,2,3-trideoxy-4,6:5,7-bis-O-[(4-propylphenyl)methylene]-nonitol, 1,3,2,4-dibenzylidene sorbitol, 1,3,2,4-di-(p-methylbenzylidene) sorbitol, and 1,3-p-chlorobenzylidene-2,4-p-methylbenzylidene sorbitol.

Specific examples of the phosphorus-based nucleating agents include sodium bis-(4-t-butylphenyl) phosphate, potassium bis-(4-t-butylphenyl) phosphate, sodium 2,2'-ethylidene bis(4,6-di-t-butylphenyl) phosphate, sodium 2,2'-methylene bis(4,6-di-t-butylphenyl) phosphate, bis(2,4,8,10-tetra-t-butyl-6-hydroxy-12H-dibenzo[d,g][1,3,2]dioxaphosphocin-6-oxide) sodium salt and bis(2,4,8,10-tetra-t-butyl-6-hydroxy-12H-dibenzo[d,g][1,3,2]dioxaphosphocin-6-oxide) aluminum hydroxide salt.

Specific examples of the cyclic dicarboxylate-based nucleating agents include 1,2-cyclohexanedicarboxylic acid, 1,4-cyclohexanedicarboxylic acid, bicyclo[2,2,1]heptenedicarboxylic acid, and sodium salts and calcium salts thereof.

Specific examples of the metal carboxylate-based nucleating agents include aluminum p-t-butylbenzoate, aluminum hydroxy-di(p-t-butylbenzoate) (trade name "AL-PTBBA," manufactured by Japanchem Incorporated), aluminum adipate, and sodium benzoate.

As the polymer-based nucleating agents, branched $\alpha$-olefin polymers can be suitably used.

Examples of the branched $\alpha$-olefin polymers include homopolymers of 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, or 3-ethyl-1-hexene, copolymers thereof, and furthermore, copolymers of the above-listed branched $\alpha$-olefin polymer and a different $\alpha$-olefin.

Among these, examples of high-melting point polymers include polyvinylcycloalkanes such as polyvinylcyclohexane and polyvinylcyclopentane, poly 3-methyl-1-pentene, poly 3-methyl-1-butene, and polyalkenylsilane.

Specific examples of the inorganic compound-based nucleating agents include talc, mica, and calcium carbonate.

Examples of the rosin-based nucleating agents include metal salts of a rosin acid, and the metal salt of a rosin acid refers to a reaction product of a rosin acid and a metal compound. As the rosin acid, for example, natural rosins such as gum rosin, tall oil rosin, and wood rosin; a variety of modified rosins such as disproportionated rosin, hydrogenated rosin, dehydrogenated rosin, polymerized rosin, and $\alpha,\beta$-ethylenically unsaturated carboxylic acid-modified rosin; purified products of the natural rosins, and purified products of the modified rosins can be exemplified. Examples of an unsaturated carboxylic acid that is used for the preparation of the $\alpha,\beta$-ethylenically unsaturated carboxylic acid-modified rosin include maleic acid, maleic anhydride, fumaric acid, itaconic acid, itaconic anhydride, citraconic acid, acrylic acid, and methacrylic acid. Among these, at least one rosin acid selected from natural rosins, modified rosins, purified product of a natural rosin, and purified products of a modified rosin is preferable. Here, the rosin acid contains a plurality of resin acids selected from, for example, pimaric acid, sandaracopimaric acid, palustric acid, isopimaric acid, abietic acid, dehydroabietic acid, neoabietic acid, dihydropimaric acid, dihydroabietic acid, and tetrahydroabietic acid.

Examples of the metal compound that reacts with the rosin acid to form the metal salt include compounds that have a metal element such as sodium, potassium, or magnesium and form a salt with the rosin acid. Specific examples thereof include chlorides, nitrates, acetates, sulfates, carbonates, oxides, and hydroxides of the metal.

Among these nucleating agents, the cyclic dicarboxylate-based nucleating agents are suitable, and in particular, as a commercially available product, trade name "Hyperform HPN-20E" containing 1,2-cyclohexanedicarboxylic acid calcium salt as a main component (manufactured by Milliken & Company) is suitable.

These nucleating agents may be used singly, or two or more thereof may be jointly used.

The stretched film of the present invention contains 100 to 2500 ppm of the nucleating agent relative to 100 parts by mass of the ethylene-based polymer. The lower limit of the proportion of the nucleating agent blended is preferably 200 ppm or more, and the upper limit is preferably 2000 ppm or less.

Furthermore, in the present invention, the nucleating agent is also set to 900 ppm or less in one aspect. At a proportion of less than 100 ppm, the luster tends to become insufficient, and when the proportion exceeds 2500 ppm, the strength tends to become low.

Regarding other polymers

The stretched film may further contain other polymers other than the ethylene-based polymer to an extent that the object of the present invention is not impaired. Examples of the other polymers include thermoplastic resins other than the ethylene-based polymer. Examples of the thermoplastic resins include olefin-based polymers other than the ethylene-based polymer, (meth)acrylic resins, polyvinyl chloride, polystyrene, polyester, polyamide, polyimide, polyacetal, polyvinyl alcohol, polyacrylonitrile, and polycarbonate.

In a case where the other polymers are contained, the content of the other polymers is normally 0.1 parts by mass or more and more preferably 1 part by mass or more and is normally 30 parts by mass or less, preferably 20 parts by mass or less, and more preferably 10 parts by mass or less in a case where the total of the contents of the ethylene-based polymer and the other polymers is set to 100 parts by mass. However, in a case where the film of the present invention is used as a mono-material composed of a single type of material, there is an embodiment in which the other polymers are not substantially contained or an embodiment in which the content of the other polymers is 0 parts by mass.

The stretched film of the present invention may contain, if needed, at least one of a variety of additives that are added to ordinary polyolefin-based resins, for example, a neutralizer, a weathering stabilizer, a heat-resistant stabilizer, an antistatic agent, an antifogging agent, an anti-blocking agent, a slipping agent, a lubricant, a pigment, and an antisticking agent to an extent that the object of the present invention is not impaired.

In a case where the additive is added to the stretched film, the content thereof is normally 5 parts by mass or less and preferably 1 part by mass or less relative to 100 parts by mass of the ethylene-based polymer.

The stretched film of the present invention may be a uniaxially stretched film or a biaxially stretched film. The stretch ratio in the stretched film of the present invention is preferably 2.0 times or more, more preferably 2.5 times or more, particularly preferably 3.0 times or more, and most preferably 3.1 times or more. The upper limit of the stretch ratio is not particularly limited but is preferably 10 times or less and more preferably six times or less. When the stretch ratio is within the above-described range, stiffness and strength can be obtained.

The thickness of the stretched film of the present invention may be set as appropriate depending on a variety of applications, and ordinarily, the lower limit is preferably 5 μm or more and more preferably 10 μm or more, and the upper limit is preferably 150 μm or less, more preferably 100 μm or less, and still more preferably 60 μm or less. When the thickness of the stretched film is within the above-described range, stiffness and strength as a packaging material can be well balanced.

A method for producing a stretched film of the present invention is not particularly limited, and examples thereof include methods in which a film (original film to be stretched) obtained by a known melt extrusion forming method is stretched.

Examples of a method for stretching the original film to be stretched include a method in which the original film is biaxially stretched in the longitudinal and width directions simultaneously or sequentially by a tenter method, a method in which the original film is biaxially stretched in the longitudinal and width methods simultaneously by a tubular method, or a method in which the original film is uniaxially stretched in the flow direction of the film by a difference in the rotational speed ratio between two or more rolls.

In the uniaxial stretching, the original film is preferably fed into a roll stretching machine, preheated with a preheating roll, and then uniaxially stretched in the MD direction (take-off speed direction). From the viewpoint of increasing the production efficiency, the original film to be stretched is preferably preheated and then immediately stretched uniaxially in the MD direction. Uniaxial stretching in the present invention means stretching in a uniaxial direction, but the film may be stretched in a direction different from the uniaxial direction to an extent that the effect of the present invention is not impaired. This is because, depending on a stretching facility to be used, there is a case where the original film is substantially stretched in a different direction from the uniaxial direction in spite of an intention to stretch the original film in the uniaxial direction.

An annealing treatment may be performed on the stretched film after stretching, if needed. The annealing treatment can be performed by bringing a stretched sheet into contact with a heating roll.

Regarding gloss

The stretched film of the present invention has excellent luster, and the gloss (in accordance with JIS Z 8741, under a condition of a measurement angle of 20 degrees) thereof is suitably 30% or more. Furthermore, the gloss is suitably 35% or more and, in particular, suitably 40% or more.

Regarding elastic modulus

The stretched film of the present invention has an excellent balance among stiffness, low shrinkage, and machine direction tear strength, and the elastic modulus in the MD direction is preferably more than 1600 MPa, more preferably 1700 MPa or more, and still more preferably 2000 MPa or more. Particularly, as a stretched film having excellent stiffness, the elastic modulus (MD direction) is suitably 3000 MPa or more and more preferably 3500 MPa or more, and in particular, 4000 MPa or more is still more preferable.

The upper limit of this elastic modulus (MD direction) is not particularly limited but is realistically 7000 MPa or less. When the elastic modulus in the MD direction is within the above-described range, the stiffness of the film can be obtained.

Regarding tear strength

The tear strength in the longitudinal direction (MD direction) of the stretched film of the present invention is suitably 8 N/cm or more. The tear strength is preferably 10 N/cm or more and more preferably 15 N/cm or more.

For the stretched film of the present invention, all of the gloss, the elastic modulus, and the tear strength are suitably in the above-described ranges.

[Laminate]

A laminate of the present invention includes a layer made of the above-described stretched film of the present invention. The laminate of the present invention may include a plurality of layers made of the stretched film of the present invention. Other layers in the laminate containing the above-described stretched film of the present invention may be employed as appropriate depending on the application.

As the other layers in the laminate of the present invention, other plastic films, metal foils of aluminum or the like, paper, and cellophane are exemplified.

When a laminate is produced by laminating other layers on a multilayer stretched film of the present invention, it is possible to further impart a variety of functions. For example, a barrier resin (for example, EVOH or Ny) or an adhesive resin (for example, an acid-modified polyethylene of acrylic acid or maleic anhydride) may be coextruded with the stretched film or may coat the surface layer (as, for example, a vapor deposited film).

The vapor deposited film may be composed of a metal or may be composed of an inorganic oxide. Examples of the metal that constitutes a metal vapor deposited film include aluminum, chromium, tin, nickel, copper, silver, gold, and platinum. In addition, examples of the metal oxide include aluminum oxide, silicon oxide, magnesium oxide, calcium oxide, zirconium oxide, titanium oxide, boron oxide, hafnium oxide, and barium oxide.

As the plastic films, plastic films of thermoplastic resins such as polyolefins such as crystalline polypropylene, a crystalline propylene-ethylene copolymer, crystalline polybutene-1, crystalline poly 4-methylpentene-1, an ethylene-vinyl acetate copolymer (EVA), an ethylene-ethyl acrylate copolymer (EEA), and an ionically cross-linked olefin copolymer (ionomer), polyamides such as nylon 6 and nylon 66, polyesters such as polyethylene terephthalate (PET) and polytetramethylene terephthalate, and polyacetals such as a variety of polycarbonates are exemplified.

In order to produce a laminate having the other layers laminated on the stretched film of the present invention, it is also possible to interpose an adhesive or an anchoring agent, if needed, between the individual layers. In addition, for example, a metal oxide is vapor-deposited or an ink layer is provided on all or part of the surface.

A method for laminating the stretched film of the present invention and the other layers is not particularly limited, and examples thereof include a method in which the stretched film and the other layers are directly laminated together by, for example, extrusion lamination and a method in which the stretched film and the other layers are laminated together by, for example, an ozone treatment in which the stretched film and the other layers are treated in an oxidizing atmosphere (for example, a gas to which oxygen, particularly, ozone, has been added (an air)) or dry lamination.

In the laminate of the present invention, the stretched film of the present invention is preferably present in at least one outermost layer between the outermost layers on both surfaces.

In addition, one preferable aspect is the laminate of the present invention in which the stretched films of the present invention are present in the outermost layers on both sides. In this case, a layer sandwiched between the outermost layers is not particularly limited, for example, a layer composed of an olefin-based polymer can be used, and while the density is not particularly limited, preferably, a layer composed of an ethylene-based polymer having a density of less than 940 g/m$^3$ and 870 kg/m$^3$ or more can be used. In this case, the tear strength is excellent.

For example, for a surface having excellent luster, there is a tendency that not only an excellent appearance but also excellent printability is required, and a packaging material in which again the outermost layers on both sides are the stretched film of the present invention becomes a packaging material in which the outermost layer has an excellent appearance and the innermost layer has an excellent printability.

The thickness of the laminate is ordinarily about 8 $\mu$m to 2000 $\mu$m.

The laminate of the present invention is widely used in a variety of applications and is particularly suitable in an application of a packaging material.

[Packaging material]

A packaging material of the present invention includes the stretched film of the present invention or the multilayer stretched film of the present invention. Between them, for example, the packaging material composed of the laminate of the present invention is suitable in an application of packaging a variety of products and parts. Such a packaging material can be produced by, for example, superposing the laminates of the present invention so that end portions there come into contact with each other at least partially and integrating the end portions by heat fusion.

The packaging material of the present invention is used in a wide range of applications and is used in, for example, packaging a variety of products and parts such as daily necessities, machine parts, electrical parts, food, and beverages.

When the stretched film of the present invention having excellent lust is used in the outermost layer of the packaging material of the present invention, the commercial value becomes higher.

[Package]

A package obtained by packaging a variety of products, parts, food, or beverages with a packaging material including the stretched film or laminate of the present invention can be made into merchandise having an excellent appearance.

Examples

Hereinafter the present invention will be described in more detail based on Examples, but the present invention is not limited to these Examples, in any way.

In Examples below, MFR, density, molecular weight distribution (Mw/Mn), gloss, elastic modulus, heat shrinkage ratio, tear strength, and neck-in were measured as follows.

<Melt flow rate (MFR: [g/10 min])>

The melt flow rate was measured under conditions of 190°C and 2.16 kg load (kgf) in accordance with JIS K7210.

<Density [kg/m$^3$]>

The density was measured using a strand that was obtained during the measurement of the MFR in accordance with JIS K7112.

<Weight average molecular weight (Mw), number average molecular weight (Mn), and molecular weight distribution (Mw/Mn)>

The weight average molecular weight (Mw), number average molecular weight (Mn), and molecular weight distribution (Mw/Mn) of an ethylene-based polymer are numerical values measured by gel permeation chromatography (GPC) and were calculated based on a polyethylene conversion method after a calibration curve was created using a commercially available monodisperse polystyrene.

<Gloss>

The gloss was measured under a condition of a measurement angle of 20 degrees in accordance with JIS Z 8741.

<Elastic modulus>

A specimen was produced by punching a film with a dumbbell having a size in accordance with JIS K6781, and a case where the film was punched parallel to the take-off direction of the film was defined as MD (longitudinal direction). The specimen was set in air chucks of a universal tester, a tensile test was performed with a distance between the chucks of 80 mm and a tensile speed of 200 mm/min, and the slope of the initial stress relative to the displacement was regarded as the elastic modulus.

<Tear strength>

The Elmendorf tear strength was measured using an Elmendorf tear tester manufactured by Toyo Seiki Seisaku-sho, Ltd. in accordance with JIS K 7128-2. A case where a cut is made in the take-off direction of the film is defined as the MD direction.

<Neck-in>

Neck-in was calculated by the following equation.

Neck-in [%] = 100 - (original film width/film width after stretching × 100)

[Examples 1 to 7, Reference Examples 1 to 4, and Comparative Examples 1 to 3]

The following nucleating agent was used in proportions shown in Table 1-1 and Table 1-2. In addition, polymers shown in Table 1-1 and Table 1-2 were used as ethylene-based polymers.
Ethylene-based polymers with which the nucleating agent had been blended were melt-kneaded at 200°C using an extruder, and original films having a thickness of 125 $\mu$m were produced with a blown film forming machine. As the resin pressures, the pressures were measured when the extrusion amount was 49 kg/h.
These original films were uniaxially stretched with a heating roll at a stretching temperature in a stretch ratio shown in Table 1-1 and Table 1-2, thereby obtaining uniaxially stretched films.
The gloss, elastic moduli, tear strengths, and neck-in of the resultant stretched films were measured. The results are shown in Table 1-1 and Table 1-2.
In some of Reference Examples and Comparative Examples, no nucleating agents were blended, and in Reference Examples 1 and 2, the origin films having a thickness of 25 $\mu$m were used as they were without being stretched.

<Film forming conditions>

Forming machine: Blown film forming machine manufactured by Modern Machinery Company
Die: 125 mm$\varphi$ (diameter), 4 mm (lip width)
Air ring: 2-gap type
Resin temperature upon forming: 195°C
Extrusion amount: 49 kg/h

Nucleating agent

Trade name "Hyperform HPN-20E" (manufactured by Milliken & Company)
1,2-cyclohexanedicarboxylic acid calcium salt is contained as a main component.

For example, in Example 1, 0.1920 parts by mass, that is, 1920 ppm, of the nucleating agent was blended with 100 parts by mass of the ethylene-based polymer.

Ethylene-based polymers

HI-ZEX 3600F Manufactured by Prime Polymer Co., Ltd. (MFR: 1 g/10 min, density: 958 g/m$^3$, Mw/Mn: 6.5)
EVOLUE SP4505 Manufactured by Prime Polymer Co., Ltd. (MFR: 0.4 g/10 min, density: 944 g/m$^3$, Mw/Mn: 4.5)
HI-ZEX 5000SR Manufactured by Prime Polymer Co., Ltd. (MFR: 0.37 g/10 min, density: 955 g/m$^3$, Mw/Mn: 12)
EVOLUE SP6011 Manufactured by Prime Polymer Co., Ltd. (MFR: 1 g/10 min, density: 956 g/m$^3$, Mw/Mn: 2.6)
HI-ZEX 5000H Manufactured by Prime Polymer Co., Ltd. (MFR: 0.1 g/10 min, density: 958 g/m$^3$, Mw/Mn: 27)
EVOLUE SP3010 Manufactured by Prime Polymer Co., Ltd. (MFR: 0.75 g/10 min, density: 926 g/m$^3$, Mw/Mn: 10.57)
EVOLUE SP0510 Manufactured by Prime Polymer Co., Ltd. (MFR: 1.2 g/10 min, density: 903 g/m$^3$)

[Example 8]

A raw material for both outer layers was prepared by mixing 1920 ppm of the nucleating agent (trade name Hyperform HPN-20E manufactured by Milliken & Company) with 100 parts by mass of HI-ZEX 3600F manufactured by Prime Polymer Co., Ltd. as an ethylene-based polymer.
For a raw material for an intermediate layer, EVOLUE SP0510 manufactured by Prime Polymer Co., Ltd. was prepared as an ethylene-based polymer.
Next, a three-layer film having a thickness of 25 $\mu$m composed of a surface layer, an intermediate layer, and a surface layer (thickness ratio = 1:1:1) was obtained using a multilayer blown film forming machine at a stretch ratio of 5 and a stretching temperature of 126°C. The physical properties of the resultant three-layer film were measured by the following methods.
Table 2 shows the results.

<Film forming conditions>

Forming machine: Three types of three-layer blown film forming machines manufactured by ALPINE
Die: 225 mm$\varphi$ (diameter), 3 mm (lip width)
Air ring: 2-gap type
Resin temperature upon forming: 210°C
Extrusion amount: 121 kg/h

[Table 1-1]

Table 1-1

| Item | | Unit | Example 1 | Example 2 | Example 3 | Example 4 | Example 5 | Example 6 | Example 7 |
|---|---|---|---|---|---|---|---|---|---|
| Ethylene-based polymer | | | 3600F | 3600F | 3600F | 3600F | SP4505 | 5000SR | SP6011 |
| Nucleating agent | | ppm | 1920 | 1920 | 1920 | 800 | 1920 | 1920 | 1920 |
| Forming method | | - | Stretching | Stretching | Stretching | Stretching | Stretching | Stretching | Stretching |
| Physical properties of resin | MFR | g/10 min | 1 | 1 | 1 | 1 | 0.4 | 0.37 | 1 |
| | Density | kg/m$^3$ | 958 | 958 | 958 | 958 | 944 | 955 | 956 |
| | Mw/Mn | | 6.5 | 6.5 | 6.5 | 6.5 | 4.5 | 12 | 2.6 |
| Stretch ratio | | Times | 5 | 4 | 3 | 5 | 5 | 5 | 5 |
| Stretching temperature | | °C | 110 | 120 | 120 | 120 | 100 | 120 | 120 |
| Film thickness | | µm | 25 | 25 | 25 | 25 | 25 | 25 | 25 |
| Physical properties of film | Gloss | % | 105 | 57 | 47 | 90 | 120 | 44 | 115 |
| | Elastic modulus (MD direction) | MPa | 5065 | 4321 | 2722 | 4247 | 3212 | 4028 | 4227 |
| | Tear strength (MD direction) | N/cm | 21 | | 21 | 22 | 189.5 | 33 | 14 |
| Neck-in | | % | 15 | 8 | 8.5 | 8.7 | 5.5 | 5 | 7 |

[Table 1-2]

Table 1-2

| Item | | Unit | Reference Example 1 | Reference Example 2 | Comparative Example 1 | Comparative Example 2 | Reference Example 3 | Reference Example 4 | Comparative Example 3 |
|---|---|---|---|---|---|---|---|---|---|
| Ethylene-based polymer | | | 3600F | 3600F | 3600F | 5000H | 5000H | 5000H | SP3010 |
| Nucleating agent | | ppm | 2400 | - | - | 1920 | - | - | - |
| Forming method | | - | No stretching | No stretching | Stretching | Stretching | Stretching | Stretching | Stretching |
| Physical properties of resin | MFR | g/10 min | 1 | 1 | 1 | 0.1 | 0.1 | 0.1 | 0.75 |
| | Density | kg/m$^3$ | 958 | 958 | 958 | 958 | 958 | 958 | 926 |
| | Mw/Mn | | 6.5 | 6.5 | 6.5 | 27 | 27 | 27 | 10.57 |
| Stretch ratio | | Times | | | 5 | 5 | 5 | 5 | 5 |
| Stretching temperature | | °C | | | 110 | 120 | 128 | 128 | 110 |
| Film thickness | | μm | 25 | 25 | 25 | 25 | 25 | 16 | 25 |
| Gloss | | % | 30 | 35 | 17 | 4.5 | 10 | 9 | 89 |
| Physical properties of film | Elastic modulus (MD direction) | MPa | 1706 | 1753 | 5030 | 4294 | 5569 | 10123 | 1153 |
| | Tear strength (MD direction) | N/cm | | | 18.3 | 14 | 10 | 7.3 | 1591 |
| Neck-in | | % | | | 26 | 8 | | | 7.5 |

[Table 2]

Table 2

| Item | | Unit | Example 8 |
|---|---|---|---|
| Both outer layer | Ethylene-based polymer | | 3600F |
| | Nucleating agent | ppm | 1920 |
| Intermediate layer | Ethylene-based polymer | | SP0510 |
| | Nucleating agent | ppm | - |
| Laver ratio (outer layer/intermediate laver/outer layer) | | | 1/1/1 |
| Forming method | | - | Stretching |
| Stretch ratio | | Times | 5 |
| Stretching temperature | | °C | 126 |
| Film thickness | | μm | 25 |
| Physical properties of film | Gloss | % | 91 |
| | Elastic modulus (MD direction) | MPa | 3218 |
| | Tear strength (MD DIRECTION) | N/cm | 404 |
| Neck-in | | % | 4.3 |

[Table 3]

Table 3

| Item | | Unit | Example 1 | Example 5 | Example 6 | Example 7 | Reference Example 4 | Comparative Example 3 |
|---|---|---|---|---|---|---|---|---|
| Ethylene-based polymer | | | 3600F | SP4505 | 5000SR | SP6011 | 5000H | SP3010 |
| Physical properties of resin | Proportion of molecular weight of 10000 or less | mass% | 9.3 | 8.7 | 16.6 | 3.4 | 26.9 | 26.9 |
| Resin pressure Molten resin temperature 200°C Extrusion amount 49 kg/h | | MPa | 184 | - | - | 226 | - | - |

Industrial Applicability

The stretched film of the present invention is a film that has an excellent balance among stiffness, low shrinkage,

**EP 4 691 735 A1**

and machine direction tear strength and can be used as a base material for packaging materials having excellent luster, and a laminate including the stretched film is used in a variety of applications and can be used in a wide range of applications as a packaging material in a variety of applications including, particularly, applications of, for example, food.

**Claims**

1. A stretched film comprising:

    an ethylene-based polymer satisfying the following requirement (a1) and requirement (a2); and
    100 to 2500 ppm of a nucleating agent relative to 100 parts by mass of the ethylene-based polymer:

       requirement (a1): a melt flow rate (MFR) measured at 190°C and at a load of 2.16 kg is 0.2 to 10 g/10 min, and
       requirement (a2): a density is 940 to 970 kg/m$^3$.

2. The stretched film according to Claim 1, wherein a stretch ratio is twice or more and less than six times.

3. The stretched film according to Claim 1, wherein the ethylene-based polymer has a Mw/Mn of 2 to 15.

4. The stretched film according to Claim 1, wherein the stretched film has gloss of 30% or more, an elastic modulus (MD direction) of 3000 MPa or more, and a tear strength (MD direction) of 8 N/cm or more.

5. A laminate comprising:
   the stretched film according to Claim 1.

6. The laminate according to Claim 5, wherein the stretched film according to Claim 1 is positioned in at least one outermost layer in the laminate.

7. The laminate according to Claim 6, wherein the stretched film according to Claim 1 is positioned in both outermost layers of the laminate.

8. A packaging material comprising:
   the stretched film according to Claim 1 or the laminate according to Claim 5.

9. A package being packaged with the stretched film according to Claim 1 or the laminate according to Claim 5.

10. A method for producing the stretched film according to any one of Claims 1 to 4, the method comprising:

    a step of producing a film containing an ethylene-based polymer satisfying the following requirement (a1) and requirement (a2) and 100 to 2500 ppm of a nucleating agent relative to 100 parts by mass of the ethylene-based polymer by melt extrusion forming; and
    a step of stretching the film:

       (a1) a melt flow rate (MFR) measured at 190°C and at a load of 2.16 kg is 0.2 to 10 g/10 min, and
       (a2) a density is 940 to 970 kg/m$^3$.

## INTERNATIONAL SEARCH REPORT

| International application No. |
| --- |
| **PCT/JP2024/013033** |

### A. CLASSIFICATION OF SUBJECT MATTER

**B29C 55/02**(2006.01)i; **B29C 55/06**(2006.01)i; **B32B 27/32**(2006.01)i; **B65D 65/40**(2006.01)i; **C08J 5/18**(2006.01)i; **C08L 23/04**(2006.01)i; *B29K 23/00*(2006.01)n; *B29L 7/00*(2006.01)n
FI: B29C55/02; B32B27/32; C08L23/04; C08J5/18; B29C55/06; B65D65/40 D; B29K23:00; B29L7:00

According to International Patent Classification (IPC) or to both national classification and IPC

### B. FIELDS SEARCHED

Minimum documentation searched (classification system followed by classification symbols)

B29C55/00-55/30; B32B1/00-43/00; B65D65/40; C08J5/18; C08L23/04; B29K23/00; B29L7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2018-501127 A (NOVA CHEMICALS (INTERNATIONAL) S.A.) 18 January 2018 (2018-01-18)<br>claims, paragraphs [0009]-[0010], [0020]-[0023], [0027]-[0029], tables 1-3 | 1-10 |
| X | JP 2013-234261 A (MITSUBISHI PLASTICS, INC.) 21 November 2013 (2013-11-21)<br>claims, paragraphs [0019]-[0020], [0031]-[0032], [0035], [0044], [0079]-[0080], [0083], table 1 | 1, 3-9 |
| Y | | 2, 10 |
| Y | JP 2022-39843 A (NIPPON POLYETHYLENE KK) 10 March 2022 (2022-03-10)<br>claims, paragraphs [0024]-[0025], [0027], [0030]-[0032], [0052], [0056], examples | 2, 10 |
| A | JP 2019-521013 A (DOW GLOBAL TECHNOLOGIES LLC) 25 July 2019 (2019-07-25)<br>entire text, all drawings | 1-10 |
| P, X | WO 2023/243691 A1 (TOSOH CORP.) 21 December 2023 (2023-12-21)<br>paragraphs [0007]-[0083] | 1-10 |

☐ Further documents are listed in the continuation of Box C.   ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **25 April 2024** | **18 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

# EP 4 691 735 A1

| Patent document cited in search report | | | Publication date (day/month/year) | Patent family member(s) | | | Publication date (day/month/year) |
|---|---|---|---|---|---|---|---|
| JP | 2018-501127 | A | 18 January 2018 | US | 2017/0274574 | A1 | |
| | | | | claims, paragraphs [0017]-[0020], [0050]-[0056], [0070]-[0077], tables 1-3 | | | |
| | | | | WO | 2016/097951 | A1 | |
| | | | | EP | 3233473 | A1 | |
| | | | | CN | 107000372 | A | |
| | | | | KR | 10-2017-0094270 | A | |
| JP | 2013-234261 | A | 21 November 2013 | WO | 2013/118413 | A1 | |
| | | | | TW | 201332767 | A | |
| JP | 2022-39843 | A | 10 March 2022 | (Family: none) | | | |
| JP | 2019-521013 | A | 25 July 2019 | US | 2019/0126598 | A1 | |
| | | | | WO | 2018/005577 | A1 | |
| | | | | EP | 3475076 | A1 | |
| | | | | CN | 109362225 | A | |
| WO | 2023/243691 | A1 | 21 December 2023 | JP | 2023-184219 | A | |
| | | | | JP | 2023-184220 | A | |
| | | | | JP | 2023-184221 | A | |

Form PCT/ISA/210 (patent family annex) (July 2022)